# EUROPÄISCHE PATENTSCHRIFT

(11) **EP 1 561 622 B1**
(45) Veröffentlichungstag und Bekanntmachung des Hinweises auf die Patenterteilung: **14.05.2008**
(21) Anmeldenummer: 05001381.2
(22) Anmeldetag: 25.01.2005
(51) Int. Cl.: B60J 7/185

(54) **Verschluss für Verdecke, insbesondere für einen Stoffhaltebügel eines Verdecks**
Lock for foldable top, especially for canvas frame of foldable top
Verrouillage pour capote, en particulier pour la structure de support de toile de capote

(30) Priorität: 04.02.2004 DE 102004005644
(43) Veröffentlichungstag der Anmeldung: 10.08.2005
(73) Patentinhaber: ISE Industries GmbH, 58455 Witten (DE)
(72) Erfinder: Ellenbeck, Günter, 45883 Gelsenkirchen (DE)
(74) Vertreter: Wenzel & Kalkoff

(56) Entgegenhaltungen:
- AT-B- 406 661
- DE-A1- 19 944 615
- US-B2- 6 520 560

## Beschreibung

Die Erfindung betrifft einen Verschluss für Verdecke, Klappen oder dergleichen an Fahrzeugen, insbesondere zur Arretierung und Verspannung eines Stoffhaltebügels eines verschwenkbaren Pkw-Verdecks, mit einer eine Drehfalle aufweisenden Schließeinheit zur Aufnahme und Arretierung eines Halteelements und einer Antriebseinheit zum Verschwenken der Drehfalle zwischen einer geöffneten und einer geschlossenen Stellung des Verschlusses.

Ein derartiger Verschluss wird bevorzugt zur Arretierung und Verspannung eines Stofthaltebügels an Verdecken von Cabriolets eingesetzt, kann jedoch beispielsweise auch als Verschluss für Verdecke oder dergleichen eingesetzt werden.

Im Falle der Verwendung eines solchen Verschlusses zur Arretierung und Verspannung eines Stoffhaltebügels, der im geschlossenen Zustand des Verdecks - in Fahrtrichtung eines PKWs gesehen - im Bereich hinter dem Fahrzeuginnenraum auf der Karosserie aufliegt, ist eine zuverlässige Funktionsweise des eingangs genannten Verschlusses unerläßlich, um zu gewährleisten, daß das Verdeck den Innenraum straff überspannt. Damit wird dem Eindringen von Feuchtigkeit in den Fahrzeuginnenraum sowie dem Entstehen von Windgeräuschen wirksam vorgebeugt.

Bei einem derartigen Verschluss erfolgt nach einer ausreichenden Annäherung eines an dem Stoffhaltebügel angeordneten Halteelements in den Wirkungsbereich des Verschlusses eine Schließbewegung, bei der das Halteelement im Verschluss arretiert wird. Ein Halteelement ist im Rahmen dieser Anmeldung jedes Bauteil, beispielsweise ein Verschlusszapfen an einem Stoffhaltebügel, das mit der Drehfalle des Verschlusses in Eingriff gebracht werden kann, wodurch das mit dem Halteelement verbundene Bauteil verriegelt und arretiert wird.

Im Falle der Verwendung des eingangs genannten Verschlusses zur Arretierung und Verspannung eines Stoffhaltebügels wird der Verschlusszapfen, nachdem dieser in den Wirkungsbereich des Verschlusses gelangt ist, durch die Aktivierung des Verschlusses mit einer entsprechend ausgebildeten Drehfalle am Verschluss in Eingriff gebracht, die den Verschlusszapfen in die geschlossene Stellung überführt, in der der Stoffhaltebügel arretiert und verspannt ist. Eine weitere Drehfallenkinematik dient bei bekannten Verschlüssen der eingangs genannten Art in der Regel zur Sicherung der geschlossene Stellung.

Im Falle der Öffnung des Verdecks wird die Wirkrichtung des Verschlusses lediglich umgekehrt, so daß der Verschlusszapfen freigegeben und somit der Stoffhaltebügel frei verschwenkt werden kann.

Die bekannten Ausführungsformen der eingangs genannten Verschlüsse weisen den erheblichen Nachteil auf, daß sie zwingend die Verwendung einer Sensorik zum Erkennen der Position des Halteelements, beispielsweise des Verschlusszapfens des Stoffhaltebügels, relativ zur Drehfalle voraussetzen, die gewährleisten soll, daß der Verschluss erst aktiviert wird, wenn das Halteelement entsprechend positioniert ist. Die Sensorik ist dabei direkt an dem Verschluss angeordnet oder der Verschluss ist zumindest direkt oder indirekt mit einer solchen Sensorik verbunden.

Aufgrund der erforderlichen Genauigkeit der Sensorik, die notwendig ist, um Fehlfunktionen vorzubeugen, ist diese besonders aufwendig und teuer. Dies führt bei einer direkten Anordnung der Sensorik am Verschluss zu erheblichen Stückkosten für den einzelnen Verschluss. Auch die Kopplung mit einer teuren externen Sensorik führt nicht zu einer Kostenreduzierung, da diese grundsätzlich vorhanden sein muß. Zudem muß in diesen Fällen der Verschluss nach dessen Montage am Fahrzeug aufwendig und umständlich mit der externen Sensorik verbunden werden.

Die gattungsbildende DE-A-199 44 615 offenbart ein Schloss für ein verschwenkbares Kramahrzeugverdeck zum Fangen eines an dem Verdeck angeordneten Bügel, welcher einem Halteelement entspricht. Das Schloss weist eine der Drehfalle entsprechende Bügelfalle auf, welche zur Aufnahme des Bügels vorgesehen ist. Unter Verwendung einer Antriebseinheit ist die Bügelfalle zwischen einer geöffneten Stellung und einer geschlossenen Stellung des Verschlusses verstellbar, wobei die Antriebseinheit in der geöffneten Stellung des Verschlusses vorgespannt ist.

Bei dem dargestellten Schloss erfolgt die Lagesicherung der Bügelfalle nicht über eine Rastvorrichtung, sondern über eine Übertotpunktlagerung. Eine Rastvorrichtung zur Positionssicherung der Bügelfalle in der geöffneten Stellung ist nicht vorgesehen. Insofern dient der Bügel auch nicht zur Entriegelung einer separaten Rastvorrichtung.

Der Erfindung liegt die Aufgabe zugrunde, einen Verschluss bereitzustellen, der ohne die Verwendung einer aufwendigen Sensorik eine zuverlässige Verriegelung eines Halteelements gewährleistet.

Die Erfindung löst die Aufgabe durch eine Verschluss gemäß Anspruch 1. Vorteilhafte Weiterbildungen der Erfindung sind in den abhängigen Ansprüchen angegeben.

Kennzeichnend für den erfindungsgemäßen Verschluss ist eine Antriebseinheit, die in der Öffnungslage des Verschlusses in Richtung auf dessen Schließlage vorgespannt ist, wobei die an der Schließeinheit des Verschlusses schwenkbar angeordnete Drehfalle durch ein mit der Drehfalle in Eingriff bringbares Halteelement, beispielsweise ein Verschlusszapfen an einem Stoffhaltebügel, entriegelbar in der Öffnungslage des Verschlusses arretiert ist.

Die erfindungsgemäße Ausgestaltung des Verschlusses, wonach dieser in Richtung auf die Schließlage vorgespannt ist, erlaubt es, vollständig auf eine Sensorik zur Steuerung der Antriebseinheit zu verzichten, da die die Drehfalle zwischen der geöffneten und geschlossenen Stellung des Verschlusses verschwenkende Antriebseinheit in Folge der Vorspannung unmittelbar nach der Entriegelung der Drehfalle bis in die Schließlage verschwenkt, ohne daß es einer externen Aktivierung der Antriebseinheit bedarf.

Die Entriegelung der Drehfalle erfolgt im Normalbetrieb, d.h. im störungsfreien Betrieb, in dem die Drehfalle des Verschlusses zwischen der geöffneten und geschlossenen Stellung bewegt wird, erst durch eine entsprechende Positionierung des Halteelements an dem Verschluss, bspw. durch ein Zusammenwirken des Verschlusszapfens mit der Drehfalle, wobei sich das Halteelement dann immer in einer zum Zuziehen und Verriegeln vorgegebenen Position relativ zur Drehfalle befindet. Dadurch wird gewährleistet, daß es zu keiner Funktionsstörung kommt, bei der der Verschluss geschlossen wird, während sich das Halteelement außerhalb des Eingriffsbereichs der Drehfalle befindet.

Der erfindungsgemäße Verschluß läßt sich somit sehr einfach, kompakt und kostengünstig herstellen und weist zudem eine hohe Funktionssicherheit auf.

Der Aufbau des Verschlusses derart, daß die Drehfalle trotz der Kraftbeaufschlagung durch die in Richtung auf die geschlossene Stellung des Verschlusses vorgespannte Antriebseinheit entriegelbar in der Öffnungslage arretiert ist, kann grundsätzlich auf beliebige Weise erfolgen.

Nach einer vorteilhaften Weiterbildung der Erfindung weist die Schließeinheit eine Funktionsscheibe auf, die derart ausgebildet und mit der Drehfalle und einer Rastvorrichtung zusammenwirkt, daß sie die Drehfalle in der geöffneten Stellung des Verschlusses in Zuziehrichtung arretiert und daß das Zusammenwirken mit dem Halteelement eine die Drehfalle entriegelnde Relativbewegung der Drehfalle gegenüber der Funktionsscheibe bewirkt.

Durch diese Ausgestaltung der Erfindung, bei der die Antriebseinheit nur mittelbar mit der Drehfalle verbunden ist die Drehfalle in der geöffneten Stellung im wesentlichen unbelastet durch die Vorspannkraft der Antriebseinheit, die direkt an der Funktionsscheibe angreift, verriegelt. Dies ermöglicht es, die zur Entriegelung der Drehfalle notwendige Kraft unabhängig von der Vorspannung der Antriebseinheit zu wählen, da die Drehfalle im wesentlichen lastfrei in der Öffnungslage verriegelt ist. Die zur Entriegelung notwendige Kraft kann konstruktiv, bspw. durch die Verwendung eines Federelements, frei gewählt werden. Der Bereich der Relativbewegung bestimmt sich wiederum nach der zur Entriegelung der Drehfalle erforderlichen Wegstrecke.

Im Falle der direkten Kopplung der Antriebseinheit an die Funktionsscheibe erfolgt eine Kraftübertragung auf die Drehfalle erst nach Beendigung der Relativbewegung der Drehfalle gegenüber der Funktionsscheibe.

Grundsätzlich kann die Verbindung der Funktionsscheibe mit der Drehfalle beliebig ausgebildet sein, sofern die zur Entriegelung erforderliche Relativbewegung der Drehfalle gegenüber der Funktionsscheibe gewährleistet ist. Nach einer Weiterbildung der Erfindung sind die Funktionsscheibe und die Drehfalle auf einer gemeinsamen Schwenkachse gelenkig an der Schließeinheit angeordnet, wobei die Funktionsscheibe über einen starr an dieser befestigten und in einem Langloch der Drehfalle verlaufenden ersten Zapfen mit der Drehfalle verbunden ist.

Die Kopplung der Funktionsscheibe und der Drehfalle unter Verwendung eines Zapfens und eines Langlochs stellt eine besonders einfache Verbindungsform der Funktionsscheibe mit der Drehfalle dar. Über die Länge des Langlochs kann dabei mit einem nur geringen Aufwand der Bereich der Relativbewegung festgelegt werden, der in der Regel dem zur vollständigen Entriegelung der Drehfalle nötigen Bereich entspricht.

Zum Antrieb der Drehfalle weist die Antriebseinheit nach einer vorteilhaften Weiterbildung der Erfindung ein Antriebselement, insbesondere einen einen Hydraulikzylinder aufweisenden hydraulischen Antrieb auf, wobei der Hydraulikzylinder an seinem freien Ende derart mit der Schließeinheit, insbesondere mit der Funktionsscheibe, verbunden ist, daß ein Verfahren des Hydraulikzylinders ein Verschwenken der Drehfalle zwischen der geöffneten Stellung und der geschlossenen Stellung des Verschlusses bewirkt.

Gemäß dieser Ausgestaltung der Erfindung, nach der das Antriebselement mit der Funktionsscheibe verbunden ist und diese nach der Entriegelung verschwenkt, wird auch die Drehfalle nach der Entriegelung infolge der Verbindung der Drehfalle mit der Funktionsscheibe, bspw. über die Zapfen-Langlochverbindung, aus der geöffneten Stellung in die geschlossene Stellung verschwenkt.

Der hydraulische Antrieb zeichnet sich dabei durch sein hohes Kraftpotential bei einer gleichzeitig nur geringen Geräuschentwicklung aus. Zudem kann bei einer direkten Verbindung des Hydraulikzylinders mit der Schließeinheit, insbesondere mit der Funktionsscheibe, auf zusätzliche Kraftübertragungsmittel verzichtet werden, so daß ein besonders einfacher und kostengünstiger Aufbau des Verschlusses erreicht werden kann. Die Verwendung eines Hydraulikzylinders gewährleistet zudem in besonderem Maße die Funktionssicherheit des Verschlusses.

Zur Arretierung der Drehfalle in der geöffneten Stellung des Verschlusses können im wesentlichen alle gängigen Rastvorrichtungen verwendet werden, die in zuverlässiger Weise eine Positionssicherung der Drehfalle gewährleisten. Nach einer weiteren Ausgestaltung der Erfindung ist die Rastvorrichtung durch eine Rastklinke gebildet, die einen Rastvorsprung aufweist und derart angeordnet ist, daß der Rastvorsprung in der geöffneten Stellung des Verschlusses mit einer entsprechend ausgebildeten ersten Rastmarke an der Drehfalle in Eingriff bringbar ist.

Die Rastklinke stellt dabei eine besonders einfache und funktionssichere Vorrichtung zur Arretierung der Drehfalle dar, die in der Position der Drehfalle in der geöffneten Stellung des Verschlusses eine entsprechend dem Rastvorsprung ausgebildete Rastmarke aufweist, in die der Rastvorsprung zur Arretierung der Drehfalle eingreifen kann.

Die Rastklinke selbst kann, beispielsweise unter Verwendung eines Lagerbolzens, in einfacher Weise drehbar und somit relativ zur Drehfalle beweglich an dem Verschluss angeordnet werden. Zur Erhöhung der Funktionssicherheit kann dabei in ergänzender Weise vorgesehen werden, die Rastklinke in Richtung auf die Drehfalle und die Funktionsscheibe vorzuspannen ist, so daß der Rastvorsprung ständig an der Umfangsfläche der Funktionsscheibe und der Drehfalle anliegt.

Durch diese Weiterbildung der Erfindung wird erreicht, daß der Rastvorsprung unmittelbar nach Erreichen der Rastmarke in diese einrastet, so daß in besonders zuverlässiger Weise gewährleistet ist, daß die Drehfalle in der geöffneten Stellung des Verschlusses arretiert ist.

Um auch im Falle des Ausfalls der Antriebseinheit ein Verschließen bzw. Verriegeln des Halteelements durch den Verschluss zu ermöglichen, weist die Drehfalle nach einer Weiterbildung der Erfindung eine zweite Rastmarke auf, die mit dem Rastvorsprung der Rastklinke in Eingriff bringbar ist. Durch Einführen des Halteelements in den Verschluss über die zur Aktivierung des Verschlusses erforderliche Position hinaus, kann die Drehfalle durch das Halteelement soweit verschwenkt werden, daß die Rastklinke in diese zweite Rastmarke einrastet und das Halteelement arretiert. Im Falle der Verwendung des Verschlusses zur Arretierung und Spannung eines Stoffhaltebügels kann das Verdeck folglich zumindest so verschlossen werden, daß eine Weiterfahrt in eine Werkstatt möglich ist, wobei der Innenraum ausreichend geschützt ist.

Um zu gewährleisten, daß die zweite Rastmarke nur im Falle des Ausfalls des Antriebselements mit der Rastklinke in Eingriff kommt, ist die Funktionsscheibe gemäß einer Weiterbildung der Erfindung derart ausgebildet und an der Drehfalle angeordnet, daß die Funktionsscheibe die zweite Rastmarke bei der Anlage des ersten Zapfens an dem der zweiten Rastmarke zugewandten Ende des Langlochs in der durch den ersten Lagerbolzen zur Aufnahme der Funktionsscheibe und der Drehfalle gebildeten Schwenkachsenrichtung im wesentlichen vollständig überdeckt. Da im Normalbetrieb der erste Zapfen bei der Zuziehbewegung ständig an dem der zweiten Rastmarke zugewandten Ende des Langlochs und der Rastvorsprung sowohl an der Umfangsfläche der Drehfalle als auch an der Umfangsfläche der Funktionsscheibe anliegt, wird zuverlässig erreicht, daß der Rastvorsprung im Normalbetrieb nicht in die zweite Rastmarke zur Sicherung einer notverriegelten Stellung eingreift.

Ein Einrasten in die zweite Rastmarke ist nur dann möglich, wenn der erste Zapfen nicht an dem der zweiten Rastmarke zugewandten Ende des Langlochs anliegt. Dies ist dann der Fall, wenn der Antrieb ausfällt und das Halteelement zuerst die Drehfalle relativ gegenüber dem ersten Zapfen verschiebt und anschließend die Drehfalle und die Funktionsscheibe soweit verschiebt, bis der Rastvorsprung in der Rastmarke zur Notverriegelung einrastet. Da dabei der erste Zapfen nicht an dem der zweiten Rastmarke zugewandten Ende des Langlochs anliegt, ist die zweite Rastmarke nicht durch die Funktionsscheibe überdeckt, so daß ein Einrasten möglich ist.

Nach einer Weiterbildung der Erfindung ist ein Federelement, insbesondere eine Schenkelfeder derart zwischen der Funktionsscheibe und der Drehfalle angeordnet, daß der erste Zapfen der Funktionsscheibe in Richtung auf das der zweiten Rastmarke zugewandte Ende des Langlochs der Drehfalle vorgespannt ist.

Die Verwendung einer Feder gemäß dieser Weiterbildung der Erfindung gewährleistet, daß es durch die Vorspannung zu keinerlei Klappergeräuschen aufgrund von unerwünschten Relativbewegungen zwischen der Drehfalle und der Funktionsscheibe kommt. Zudem gewährleistet diese Schenkelfeder, daß der durch das Langloch hindurchragende erste Zapfen im Normalbetrieb - mit Ausnahme des Entriegelungsvorgangs - ständig an dem der zweiten Rastmarke zugewandten Ende des Langlochs anliegt, so daß in ergänzender Weise zuverlässig verhindert wird, daß der Rastvorsprung der Rastklinke im Normalbetrieb versehentlich in die zweite Rastmarke zur Notverriegelung einrastet.

Die Schließeinheit, bzw. ein Bauteil der Schließeinheit, bspw. die Funktionsscheibe, kann, wie bereits oben dargestellt, direkt mit der Antriebseinheit, bspw. dem Hydraulikzylinder verbunden werden. Nach einer vorteilhaften Weiterbildung der Erfindung weist die Antriebseinheit jedoch einen einerseits an dem freien Ende des Hydraulikzylinders und andererseits an einem Steuerungshebel schwenkbar gelagerten Antriebshebel auf, wobei an dem um eine am Verschluss ortsfeste Drehachse gelagerten Steuerungshebel zusätzlich ein erstes Ende eines Verbindungshebels schwenkbar gelagert ist und ein dem ersten Ende gegenüberliegendes zweites Ende des Verbindungshebels mit der Schließeinheit, insbesondere der Funktionsscheibe verbunden ist.

Diese Weiterbildung der Erfindung ermöglicht es, bei einer entsprechenden Ausgestaltung der Hebellängen und Abstände der Anlenkpunkte, den vom Antriebselement bereitgestellten linearen Kraftverlauf derart zu verändern, daß eine Kraftzunahme zum Ende der Zuziehbewegung auftritt, wodurch die Funktion des Verschlusses in ergänzender Weise verbessert wird.

Zur Vermeidung von zusätzlichen Bauteilen zur Verbindung des zweiten Endes des Verbindungshebels mit der Schließeinheit, kann dieser nach einer weiteren Ausgestaltung der Erfindung gelenkig mit dem durch das Langloch der Drehfalle hindurchragende Ende des ersten Zapfens verbunden werden, so daß der einfache und kompakte Aufbau des Verschlusses beibehalten werden kann.

Nach einer Weiterbildung der Erfindung kann ferner ein zweiter, parallel zum ersten Verbindungshebel angeordneter zweiter Verbindungshebel einerseits auf der Lagerachse des ersten Endes des ersten Verbindungshebels gelenkig an dem Steuerungshebel und andererseits gelenkig auf der der Drehfalle gegenüberliegenden Seite der Funktionsscheibe befestigt sein. Diese Weiterbildung der Erfindung erhöht die Stabilität der Kraftübertragung von dem Steuerungshebel auf die Schließeinheit, nämlich die Funktionsscheibe, so daß insbesondere einem Ausfall des Verschlusses durch Verkanten des Verbindungshebels wirksam vorgebeugt wird.

Die Verwendung eines Antriebshebels, eines Steuerungshebels und eines Verbindungshebels ermöglicht es zudem, bei einer entsprechenden Anlenkung der Hebel aneinander die Schließstellung des Verschlusses durch eine Übertotpunktlagerung zu sichern, bei der der Verbindungshebel und der Antriebshebel derart an dem Steuerungshebel gelagert sind, daß einem versehentlichen Öffnen wirksam vorgebeugt wird.

Die Übertotpunktlagerung erlaubt es dabei im wesentlichen vollständig auf zusätzliche Rastvorrichtung zu verzichten. Gegenüber herkömmlichen Verschlüssen, die zur Sicherung der Schließlage eine weitere Rastierung verwenden, weist der entsprechend weitergebildete Verschluss somit den Vorteil auf, daß keine weiteren federbelasteten Bauteile aufeinander reiben, was zu einem zusätzlichen Verschleiß führen würde und mit einer erheblichen Geräuschbelastung beim Erreichen der Schließstellung und beim Verlassen der Schließstellung verbunden ist.

Nach einer weiteren Ausgestaltung der Erfindung ist der Steuerungshebel drehfest mit einem die ortsfeste Drehachse bildenden zweiten Lagerbolzen verbunden und mindestens ein freies Ende des zweiten Lagerbolzens ist zum Anschluß an ein manuelles Betätigungswerkzeug ausgebildet. Diese Besonderheit des Verschlusses ermöglicht es, bei einem Ausfall der Antriebseinheit nach einer Verriegelung in der Position der Notverriegelung, den Verschluss unter Verwendung eines Betätigungswerkzeugs, bspw. eines Handhebels, vollständig zu verriegeln, so daß der Verschluss auch wieder manuell geöffnet werden kann.

Die Anordnung einer manuellen Betätigungsmöglichkeit direkt am Verschluss gewährleistet dabei, daß bei einem Ausfall des Antriebs in jedem Fall ein manuelles Öffnen des Verschlusses möglich ist, auch wenn eine Beschädigung der Antriebseinheit von solchem Ausmaß ist, daß selbst eine manuelle Betätigung der Antriebseinheit nicht mehr möglich ist. Besonders vorteilhaft ist dabei die Verwendung eines Innensechskants als Werkzeugaufnahmeöffnung, mit der unter Verwendung eines entsprechend ausgebildeten Handhebels eine zuverlässige Betätigung des Verschlusses möglich ist.

Nach einer weiteren Ausgestaltung der Erfindung sind zur Führung des mit dem freien Ende des Hydraulikzylinders verbundenen Endes des Antriebshebels auf dem Ende des Gelenkstifts Rollen angeordnet, die in entsprechend ausgebildeten Antriebshebel-Langlöchern in einem aus einer ersten und zweiten Blechscheibe gebildeten Gehäuse gelagert sind. Die Führung des freien Endes des Hydraulikzylinders erhöht dabei in zusätzlicher Weise die Funktionssicherheit des Verschlusses. Die Anordnung der Antriebshebel-Langlöcher in den das Gehäuse der Antriebseinheit bildenden Blechteilen, ermöglicht es dabei, auf zusätzliche Führungsschienen oder dergleichen zu verzichten. Zudem können die Antriebshebel-Langlöcher besonders einfach eingebracht werden und führen zu eine ergänzenden Gewichtsreduzierung, ohne die Stabilität des Verschlusses zu reduzieren.

Zur Entlastung der in der geöffneten Stellung der Drehfalle aufeinander wirkenden ersten Rastmarke und Rastklinke weist der Antriebshebel nach einer Weiterbildung der Erfindung zur Bildung einer die geöffnete Stellung des Verschlusses bestimmenden Endlage eine korrespondierend zum dritten Lagerbolzen als Vertiefung ausgebildete Anlagefläche auf.

In analoger Weise weist nach einer weiteren Ausgestaltung der Erfindung der Verbindungshebel zur Bildung einer die geschlossene Stellung bestimmenden Endlage eine korrespondierend zum zweiten Lagerbolzen als Vertiefung ausgebildete Anlagefläche auf. Die Verwendung von Endanschlägen verhindert in der geöffneten Stellung einen übermäßigen Verschleiß der Rastklinke und der Drehfalle und entlastet sowohl in der geöffneten Stellung als auch in der geschlossenen Stellung des Verschlusses den Antrieb und beugt somit möglichen Beschädigungen in wirksamer Weise vor. Die Verwendung des Verbindungshebels und des Antriebshebels zur Bereitstellung der Anlagefläche ermöglicht es dabei, auf zusätzliche Bauteile am Verschluss zu verzichten, so daß die kompakte Baugröße des Verschlusses und der einfache Aufbau beibehalten werden kann.

Zur Feststellung der Lage des Hydraulikzylinders und zum Erkennen der geschlossenen Stellung weist der Verschluss nach einer weiteren Ausgestaltung der Erfindung einen Endschalter auf, der eine Abschaltung des Antriebs bewirkt und somit in ergänzender Weise einer Beschädigung des Antriebselements vorbeugt.

Nach einer weiteren Ausgestaltung der Erfindung spannt ein einerseits an ein Gehäusegrundkörper der Schließeinheit und andererseits an der Funktionsscheibe angeordnetes Federelement, insbesondere eine Zugfeder, die Funktionsscheibe in Richtung auf die geöffnete Stellung vor. Eine derartige Weiterbildung der Erfindung gewährleistet in ergänzender Weise, daß der durch das Langloch hindurchragende erste Zapfen im Normalbetrieb - mit Ausnahme des Entriegelungsvorgangs - an dem der Rastmarke zugewandten Ende des Langlochs anliegt. Zudem wird einer ungewollten Relativbewegung der Drehfalle gegenüber der Funktionsscheibe und einer möglichen Geräuschbelastung vorgebeugt. Die Verwendung eines Federelements zur Vorspannung der Funktionsscheibe gemäß dieser Weiterbildung der Erfindung verbessert somit die Zuverlässigkeit des Verschlusses.

Nachfolgend wird ein Ausführungsbeispiel der Erfindung anhand der Zeichnungen beschrieben. In den Zeichnungen zeigen
- Fig. 1: eine perspektivische Ansicht eines Verschlusses für einen Verschlusszapfen eines Stoffhaltebügels;
- Fig. 2: eine weitere perspektivische Ansicht des Verschlusses von Fig. 1 mit einem geöffnetem Gehäuse;
- Fig. 3: eine Seitenansicht des Verschlusses von Fig. 1 in geöffneter Stellung;
- Fig. 4: eine Seitenansicht des Verschlusses von Fig. 1 mit einer entriegelten Sperrklinke;
- Fig. 5: eine Seitenansicht des Verschlusses von Fig. 1 während eines Schließvorgangs;
- Fig. 6: eine Seitenansicht des Verschlusses von Fig. 1 in geschlossener Stellung;
- Fig. 7: eine Seitenansicht des Verschlusses von Fig. 1 in einer verriegelten Stellung nach einer Notbetätigung und
- Fig. 8: eine Draufsicht des Verschlusses von Fig. 1.

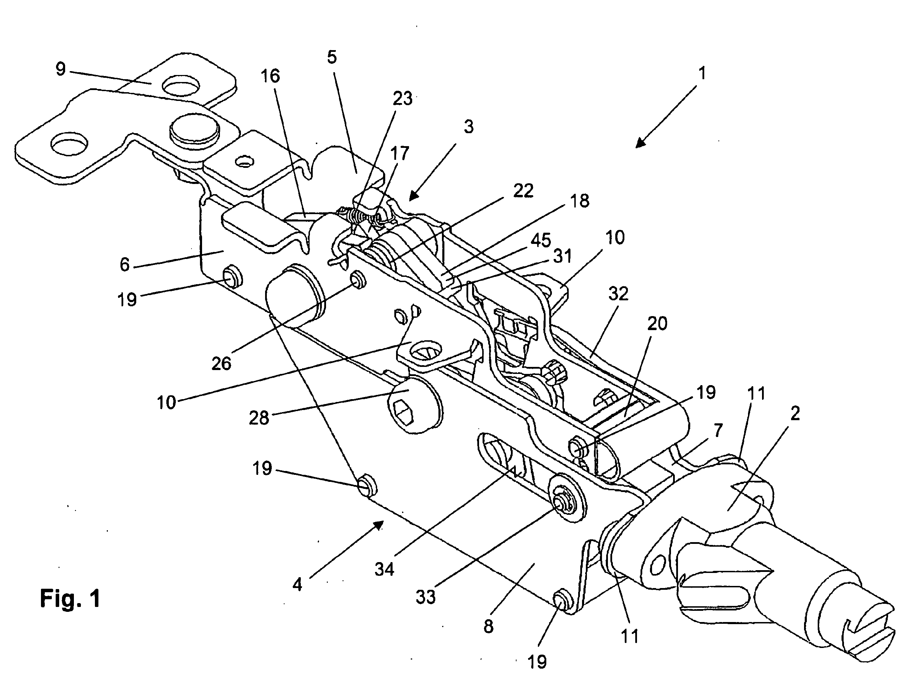

Fig. 1 zeigt eine perspektivische Ansicht eines Verschlusses 1 zur Verriegelung eines hier nicht dargestellten Verschlusszapfens eines Stoffhaltebügels eines Verdecks. Der Verschluss 1 weist eine Schließeinheit 3 und einer Antriebseinheit 4 auf, die jeweils in einem aus einem Gehäusegrundkörper 5 und einem Gehäusedeckel 6 bzw. aus einem ersten Blechteil 7 und einem zweiten Blechteil 8 gebildeten Gehäuse angeordnet sind.

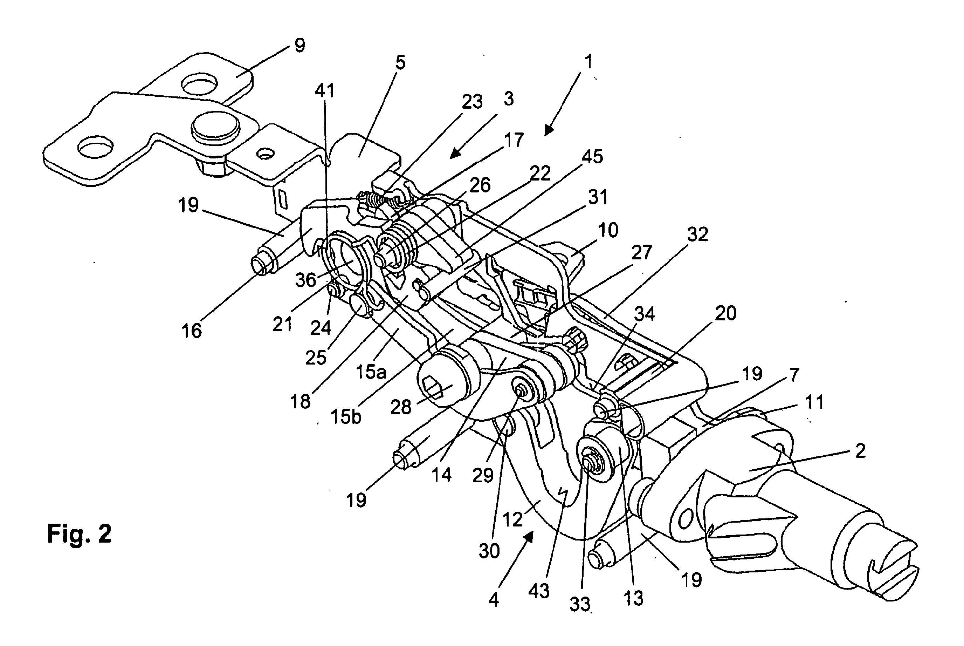

Fig. 2 zeigt eine weitere perspektivische Ansicht des Verschlusses 1 in geöffneter Form, d.h. ohne den Gehäusedeckel 6 und das zweite Blechteil 8.

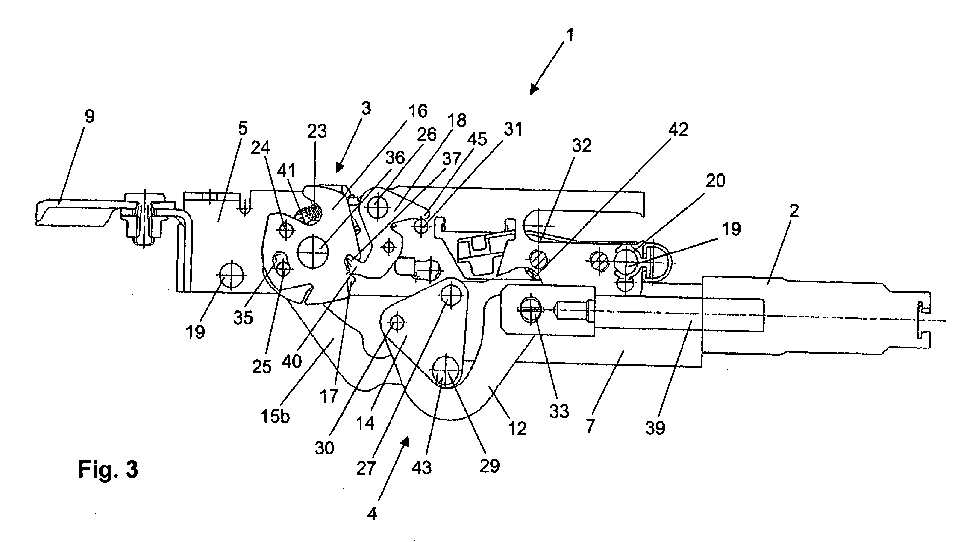

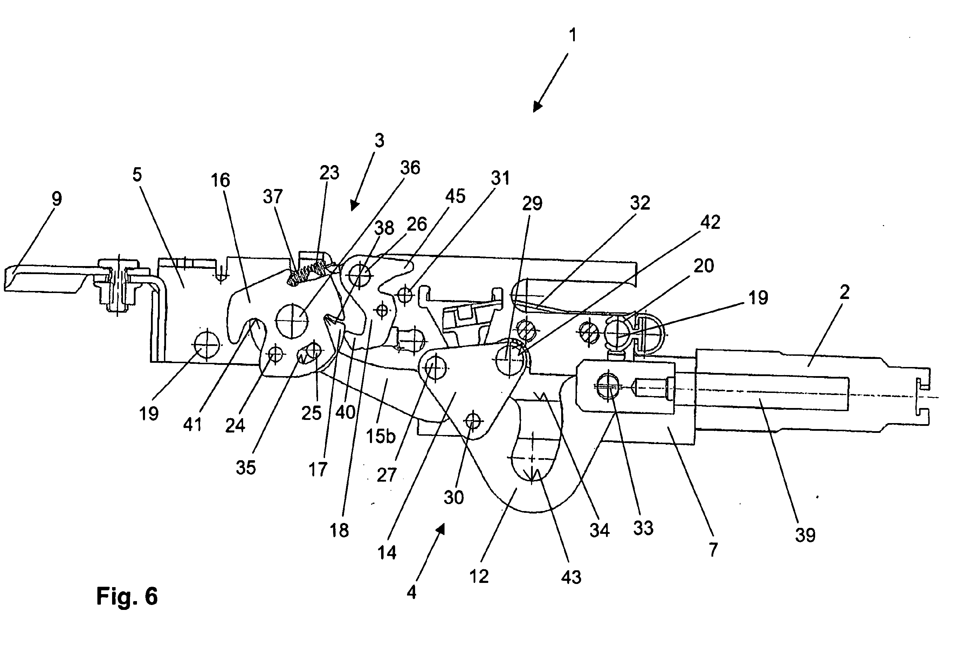

Zum Verschwenken einer Drehfalle 16 der Schließeinheit 3 zwischen einer in Fig. 3 dargestellten geöffneten Stellung des Verschlusses 1 und dessen in Fig. 6 dargestellten geschlossenen Stellung weist die Antriebseinheit 4 ein an Flansche 11 der ersten und zweiten Blechscheiben 7, 8 angeflanschtes hydraulisches Antriebselement 2 mit einem längs der Gehäuseachse des Antriebselements 2 verfahrbaren und aus diesem herausragenden Hydraulikzylinder 39 auf.

Der Hydraulikzylinder 39 ist mit seinem freien Ende über einen Gelenkstift 33 gelenkig mit einem dem Antriebselement 2 zugewandtem Ende eines Antriebshebels 12 verbunden. Zur Führung des Hydraulikzylinders 39 und zur Begrenzung von senkrecht zur Hydraulikzylinderlängsachse gerichteten Bewegungen dienen zwei beiderseits auf dem Gelenkstift 33 zwischen dessen Enden und den Seitenflächen des Antriebshebels 12 angeordnete Rollen 13, die in entsprechend ausgebildeten Antriebshebel-Langlöchern 34 in der ersten und zweiten Blechscheibe 7, 8 angeordnet sind.

Die Antriebshebel-Langlöcher 34 sind dabei derart ausgebildet, dass der Hydraulikzylinder 39 und das mit dem freien Ende des Hydraulikzylinders 39 verbundene Ende des Antriebshebels 12 im wesentlichen eine Linearbewegung ausführen.

An dem dem Hydraulikzylinder 39 gegenüberliegenden Ende des Steuerungshebels 12 ist dieser über einen vierten Lagerbolzen 30 gelenkig an einer ersten Ecke eines im wesentlichen dreieckigen Steuerungshebels 14 gelagert.

Der Steuerungshebel 14 ist seinerseits im Bereich einer zweiten Ecke über einen zweiten Lagerbolzen 27 drehbar an dem Gehäuse der Antriebseinheit 2 gelagert. Im Bereich einer dritten Ecke des Steuerungshebels 14 ist dieser über einen dritten Lagerbolzen 29 gelenkig mit dem dem Antriebselement 2 zugewandten Ende zweier Verbindungshebel 15a, 15b verbunden, die andererseits gelenkig an den Enden zweier beiderseits auf einer Funktionsscheibe 17 angeordneter Zapfen befestigt sind, wobei ein erster Zapfen 25 auf der dem Gehäusedeckel 6 zugewandten Seite durch ein Langloch 35 der Drehfalle 16 hindurchragt.

Der Verbindungshebel 15a ist dabei derart an dem ersten Zapfen 25 angeordnet, dass die Drehfalle 16 zwischen dem Verbindungshebel 15a und der Funktionsscheibe 17 positioniert ist. Die Drehfalle 16 und die Funktionsscheibe 17 sind dabei drehbar auf einem eine gemeinsame Drehachse bildenden gemeinsamen ersten Lagerbolzen 36 angeordnet.

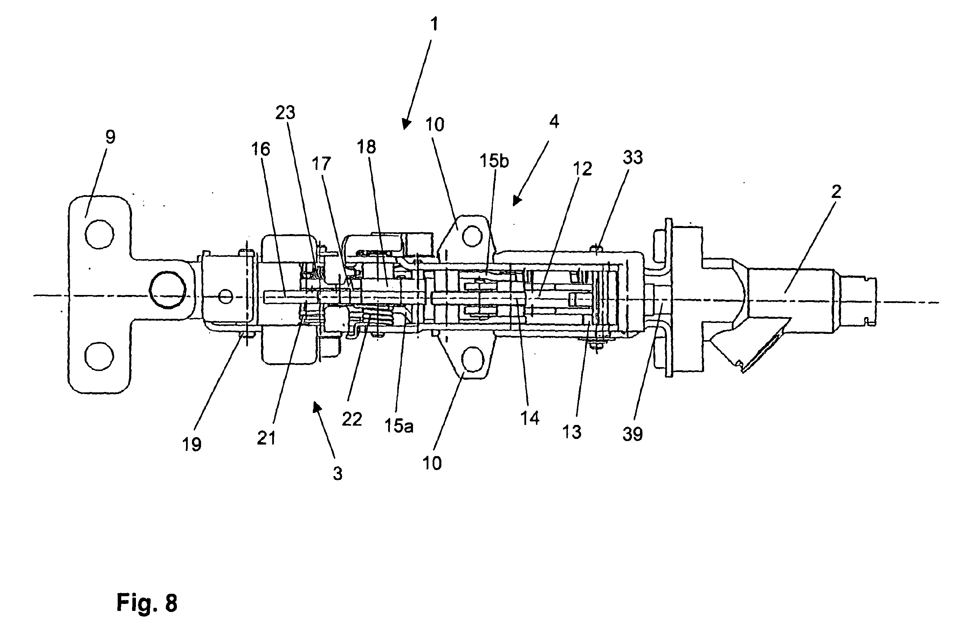

Die Drehfalle 16 ist gegenüber dem Ende des auf dem ersten Zapfen 25 gelagerten Ende des Verbindungshebels 15a mittels einer ersten Schenkelfeder 21 abgestützt, die mit ihren freien Schenkeln einerseits an dem ersten Zapfen 25 und andererseits an einem zweiten, starr mit der Drehfalle 16 verbundenen zweiten Zapfen 24 anliegt. Dies hat zur Folge, dass die Drehfalle 16 gegenüber der Funktionsscheibe 17 durch die erste Schenkelfeder 21 abgestützt ist, wobei der durch das Langloch 35 hindurchragende erste Zapfen 25 im durch den Verschlusszapfen eines Stoffhaltebügels unbelasteten Zustand der Drehfalle 16 an dem einer Öffnung 41 zur Aufnahme des Verschlusszapfens abgewandten Ende des Langlochs 35 anliegt (vgl. Fig. 8).

Die Funktionsscheibe 17 ist wiederum durch eine einerseits am Gehäusegrundkörper 5 und andererseits an der Funktionsscheibe 17 befestigte Zugfeder 23 in Richtung auf die Stellung der Funktionsscheibe 17 in der geöffneten Stellung des Verschlusses 1, d.h. entgegen der Drehrichtung der Funktionsscheibe 17 und der Drehfalle 16 beim Schließen des Verschlusses 1, vorgespannt.

Die Drehfalle 16 weist in ihrem der Öffnung 41 zur Aufnahme des hier nicht dargestellten Verschlusszapfens gegenüberliegenden Bereich zwei versetzt zueinander angeordnete Rastmarken 37, 38 auf, die mit einem Rastvorsprung 40 einer Sperrklinke 18 in Eingriff bringbar sind.

Die Sperrklinke 18 ist dabei benachbart zur Funktionsscheibe 17 gelenkig auf einem parallel zum ersten Lagerbolzen 36 angeordneten Lagerzapfen 26 angeordnet, wobei eine einerseits am Gehäusedeckel 6 und andererseits an der Sperrklinke 18 anliegende zweite Schenkelfeder 22 den Rastvorsprung 40 in Richtung auf die Drehfalle 16 und die Funktionsscheibe 17 vorspannt. Dabei dient ein Anschlagbolzen 31 zur Beschränkung der Schwenkbewegung der Sperrklinke 18 in Richtung auf die Funktionsscheibe 17 und die Drehfalle 16 indem er als Anlagefläche für eine an der Sperrklinke 18 dem Rastvorsprung 40 gegenüberliegende Rastnase 45 dient.

Zur Beschränkung der Bewegung des Hydraulikzylinders 39 in Richtung auf das Antriebselement 2 ist auf einem Distanzbolzen 19 ein Endschalter 20 angeordnet, der in dem in Fig. 6 dargestellten geschlossenen Zustand des Verschlusses 1 aktiviert ist. Der Endschalter 20 ist mit einem Endschalterträger 32 verbunden, der mittels Clipelementen, die an entsprechende Öffnungen an dem Gehäusegrundkörper 5 angepasst sind, an dem Verschluss 1 befestigt ist.

Zur Anordnung des Verschlusses 1 an einem hier nicht dargestellten Fahrzeug weist dieser zum einen zwei seitlich von dem Gehäusegrundkörper 5 und dem Gehäusedeckel 6 vorstehende Anschlussflansche 10 auf. Zum anderen ist der Gehäusedeckel 6 an seinem dem Antriebselement 2 gegenüberliegenden Ende mit einem Befestigungselement 9 verbunden, welches zur Aufnahme von Schrauben, Bolzen, Nieten oder dergleichen ausgebildet ist.

Bei der Verwendung des Verschlusses 1 zur Verriegelung und Spannung des hier nicht dargestellten Stoffhaltebügels, durchläuft der Verschluss im Normalbetrieb die in den Figuren 3 bis 6 dargestellten Positionen.

In der in Fig. 3 dargestellten geöffneten Stellung des Verschlusses 1 ist der Hydraulikzylinder 39 in Richtung auf das Antriebselement 2 vorgespannt. Die Öffnung 41 der Drehfalle 16 zur Aufnahme des hier nicht dargestellten Verschlusszapfens des Stoffhaltebügels ist zur Oberseite des Verschlusses 1 hin ausgerichtet.

Diese Position des Verschlusses 1, d.h. die Stellung der Drehfalle 16 und der Funktionsscheibe 17 gegenüber dem vorgespannten Antriebselement 2, wird durch die mit ihrem Rastvorsprung 40 in die erste Rastmarke 37 an der Drehfalle 16 eingreifende Sperrklinke 18 gesichert, wobei gleichzeitig die Funktionsscheibe 17 mit einem Vorsprung an der Rückseite des Rastvorsprungs 40 anliegt.

Bei dem Schließvorgang bewegt sich der Hydraulikzylinder 39 in Richtung auf das Antriebselement 2 und die Funktionsscheibe 17 sowie die über den ersten Zapfen 25 mechanisch mit der Funktionsscheibe 17 gekoppelte Drehfalle 16 wird in der hier gewählten Darstellung entgegen dem Uhrzeigersinn um den ersten Lagerbolzen 36 verschwenkt.

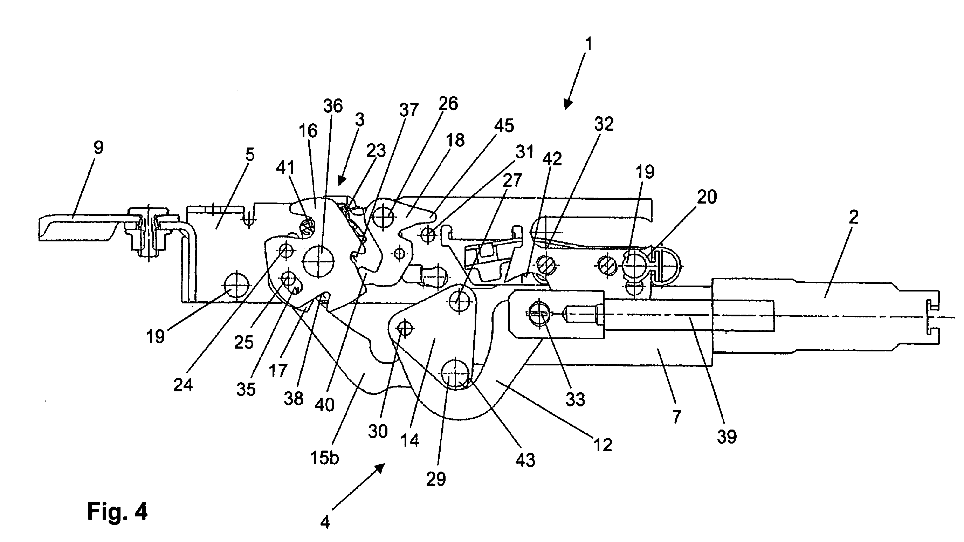

Um jedoch den Schließvorgang zu ermöglichen, muss die Drehfalle 16 zuvor entriegelt werden. Dies ist nur durch eine extern erzeugte, von der Funktionsscheibe 17 unabhängigen Bewegung der Drehfalle 16 möglich, bei der diese in dem durch das Langloch 35 vorgegebenen Winkelbereich relativ gegenüber der Funktionsscheibe 17 in die in Fig. 4 dargestellte Position verschwenkt wird, wobei der Rastvorsprung 40 der Rastfläche 18 aus der Rastmarke 37 herausschwenkt.

Ein derartiges Verschwenken der Drehfalle 16 kann allein durch das Zusammenwirken mit dem hier nicht dargestellten Verschlusszapfen des Stoffhaltebügels hervorgerufen werden, der bei der Schließbewegung des Verdecks mit dem Verschluss 1 und dabei mit der Drehfalle 16 des Verschlusses 1 in Eingriff gebracht wird.

Nach der Entriegelung der Drehfalle 16 erfolgt die Zuziehbewegung durch eine in Richtung auf das Antriebselement 2 gerichtete Bewegung des Hydraulikzylinders 39. Dabei wird der Antriebshebel 12 linear in Richtung auf das Antriebselement 2 verschoben, wodurch wiederum die Steuerungsscheibe 14 über den vierten Lagerbolzen 30, in der hier gewählten Darstellung entgegen dem Uhrzeigersinn, um den zweiten Lagerbolzen 27 verschwenkt wird.

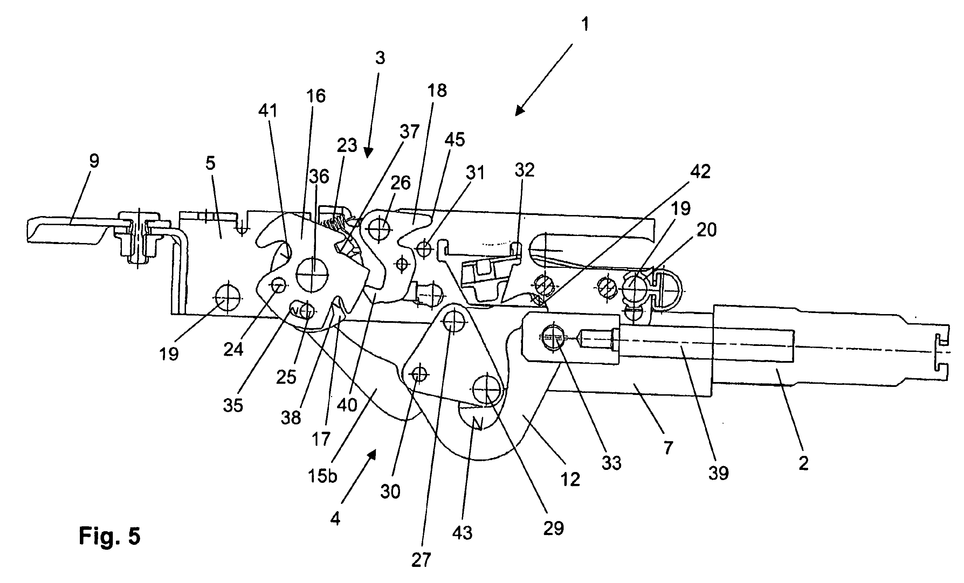

Dadurch wird wiederum der dritte Lagerbolzen 29 und die mit diesem gelenkig verbundenen Enden der Verbindungshebel 15a und 15b in Richtung auf das Antriebselement 2 verschoben. Die Verbindungshebel 15a und 15b verschwenken dabei über deren gelenkige Verbindung mit dem ersten Zapfen 25 die Funktionsscheibe 17, die soweit relativ zur Drehfalle 16 verschwenkt wird, bis der erste Zapfen 25 an dem der Öffnung 41 der Drehfalle 16 abgewandten Ende des Langlochs 35 zur Anlage kommt und der Verschluss die in Fig. 5 dargestellte Position erreicht. Anschließend werden bei der Schließbewegung die Drehfalle 16 und die Funktionsscheibe 17 gemeinsam verschwenkt.

Im weiteren Verlauf der Schließbewegung bis in die in Fig. 6 dargestellte geschlossene Stellung wird der Hydraulikzylinder 39 soweit in das Antriebselement 2 zurückgezogen, bis dieser mit seinem freien Ende mit dem Endschalter 20 in Eingriff kommt und die Schließbewegung stoppt. Zur mechanischen Festlegung der geschlossenen Stellung weist der Gehäusedeckel 6 und der Gehäusegrundkörper 5 einen entsprechend der Form des dritten Lagerbolzens 29 gebildeten Endanschlag 42 auf.

Die Funktionsscheibe 17 und die Drehfalle 16 werden bei der Schließbewegung durch die Verbindungshebel 15a und 15b gemeinsam um den ersten Lagerbolzen 36 geschwenkt, wodurch der hier nicht dargestellte Verschlusszapfen des Stoffhaltebügels weiter in den Verschluss 1 hineingezogen wird. Während der Schließbewegung liegt der erste Zapfen 25 an dem der Öffnung 41 abgewandten Ende des Langlochs 35 an. Die Funktionsscheibe 17 überdeckt dabei während der gesamten Schließbewegung die zweite Rastmarke der Drehfalle 16. Folglich kann der sowohl an der Funktionsscheibe 17 als auch an der Drehfalle 16 anliegende Rastvorsprung 40 der Rastklinke 18 nicht in die zweite Rastmarke 38 einrasten.

Aufgrund der Übertotpunktlage des dritten Lagerbolzens 29 gegenüber dem zweiten Lagerbolzen 27 in der geschlossenen Stellung des Verschlusses 1 ist dieser stabil und der Verschluss 1 gegen versehentliches Öffnen geschützt.

Bei einer Öffnungsbewegung des hier nicht dargestellten Verdecks erfolgt die Freigabe des Verschlusszapfens des Stoffhaltebügels durch eine Umkehr der Bewegungsrichtung des Hydraulikzylinders 39, wobei die Endstellung des Antriebshebels 12 mechanisch durch die bogenförmige Anschlagfläche 43 bestimmt wird, die in der geöffneten Stellung des Verschlusses 1 an dem dritten Lagerbolzen 29 zur Anlage kommt und ein weiteres Verschwenken des Steuerungshebels 14 verhindert.

Um auch bei einem Ausfall des Antriebselements 2 in der geöffneten Stellung des Verschlusses, eine Verriegelung des Verschlusszapfens des hier nicht dargestellten Stoffhaltebügels, d.h. einen Notbetrieb zu ermöglichen, so daß das Fahrzeug ggf. auch bei Regen zu einer Werkstatt gefahren werden kann, ist eine Notbetätigung vorgesehen.

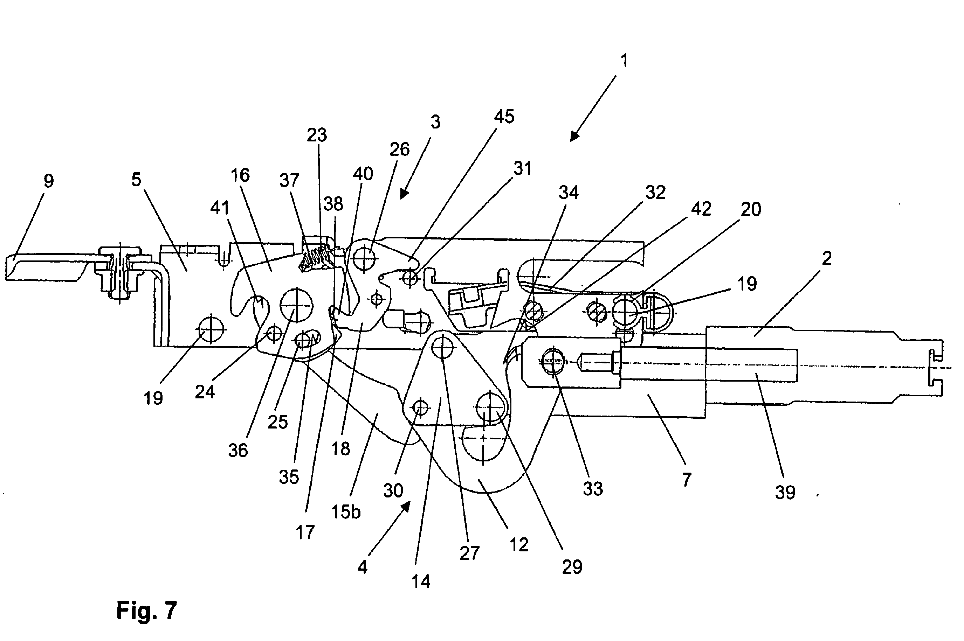

Der Verschluss 1 wird dabei ausgehend von der in Fig. 3 dargestellten geöffneten Stellung nach Durchlaufen der in Fig. 4 dargestellten entriegelten Position manuell durch das Zusammenwirken mit dem Verschlusszapfen in die in Fig. 7 dargestellte Stellung bewegt.

Analog zu den oben genannten Ausführungen erfolgt die Entriegelung der Drehfalle 16 durch das manuelle oder automatische Betätigen des Verdecks, wobei dessen an dem Stoffhaltebügel angeordnete Verschlusszapfen beim Schließvorgang des Verdecks mit der Öffnung 41 der Drehfalle 16 in Eingriff kommt und die Drehfalle 16 in die in Fig. 4 dargestellte Position bewegt.

Entgegen der obigen Darstellung zum Normalbetrieb wird die weitere Drehbewegung der Drehfalle 16 nicht durch die Antriebseinheit 3 sondern nur durch die Bewegung des Verschlusszapfens des Stoffhaltebügels hervorgerufen. Dieser wird so weit in den Verschluss 1 bewegt, wobei die Drehfalle 16 um den ersten Lagerbolzen 36 verschwenkt wird, bis der Rastvorsprung 40 in die zweite Rastmarke 38 an der Drehfalle 16 eingreift.

Dies ist im Gegensatz zu dem obengenannten Normalbetrieb möglich, da infolge des Ausfalls der Antriebseinheit 3 der erste Zapfen 25 während des Notbetriebs ständig an dem der Öffnung 41 zugewandtem Ende des Langlochs 35 anliegt. Die zuvor dargestellte Relativbewegung der Funktionsscheibe 17 gegenüber der Drehfalle 16 beim Zuziehen, wobei gleichzeitig der erste Zapfen 25 wieder an dem der Öffnung 41 gegenüberliegenden Ende des Langlochs 35 zur Anlage kommt, unterbleibt. Da die Funktionsscheibe 17 die zweite Rastmarke 38 nur überdeckt, wenn der erste Zapfen 25 an dem der zweiten Rastmarke 38 zugewandten Ende des Langlochs 35 anliegt, kann beim Notbetrieb des Rastvorsprungs 40 der Rastklinke 18 in die zweite Rastklinke 38 eingreifen.

Zur späteren Reparatur kann über einen an einem Ende des zweiten Lagerbolzens 27 angeordneten Innensechskant 28, der mittels eines Werkzeugs ein manuelles Verschwenken des zweiten Lagerbolzen 27 ermöglicht, die Sperrklinke 18 mit einem entsprechenden Werkzeug durch vollständiges Verriegeln des Verschlusses 1 ausgehebelt werden, so dass der Verschluss 1 auch wieder manuell geöffnet werden kann.

## Patentansprüche

1. Verschluss für Verdecke, Klappen oder dergleichen an Fahrzeugen, insbesondere zur Arretierung und Verspannung eines Stoffhaltebügels eines verschwenkbaren Pkw-Verdecks, mit
- einer eine Drehfalle aufweisenden Schließeinheit zur Aufnahme und Arretierung eines Halteelements und
- einer Antriebseinheit zum Verschwenken der Drehfalle zwischen einer geöffneten Stellung und einer geschlossenen Stellung des Verschlusses,
**wobei**
- die Antriebseinheit (4) in der geöffneten Stellung des Verschlusses (1) in Richtung auf die geschlossene Stellung des Verschlusses (1) vorgespannt ist, **dadurch gekennzeichnet, dass**
- die Drehfalle (16) durch das Halteelement entriegelbar in der geöffneten Stellung des Verschlusses (1) mittels einer Rastvorrichtung (18) arretiert ist.

2. Verschluss nach Anspruch 1, **dadurch gekennzeichnet, dass** die Schließeinheit (3) eine Funktionsscheibe (17) aufweist, die derart ausgebildet und mit der Drehfalle (16) und der Rastvorrichtung (18) zusammenwirkt, dass sie die Drehfalle (16) in der geöffnete Stellung des Verschlusses (1) in Zuziehrichtung arretiert und das Zusammenwirken mit dem Halteelement eine die Drehfalle (16) entriegelnde Relativbewegung der Drehfalle (16) gegenüber der Funktionsscheibe (17) bewirkt.

3. Verschluss nach Anspruch 2, **dadurch gekennzeichnet, dass** die Funktionsscheibe (17) und die Drehfalle (16) auf einer gemeinsamen Schwenkachse gelenkig an der Schließeinheit (3) angeordnet sind, wobei die Funktionsscheibe (17) über einen starr an dieser befestigten und in einem Langloch (35) der Drehfalle (16) verlaufenden ersten Zapfen (25) mit der Drehfalle (16) verbunden ist.

4. Verschluss nach einem oder mehreren der vorgehenden Ansprüche, **dadurch gekennzeichnet, dass** die Antriebseinheit (4) ein Antriebselement, insbesondere einen einen Hydraulikzylinder (39) aufweisenden hydraulischen Antrieb (2) aufweist, wobei der Hydraulikzylinder (39) an seinem freien Ende derart mit der Schließeinheit (3), insbesondere mit der Funktionsscheibe (17) verbunden ist, dass ein Verfahren des Hydraulikzylinders (39) ein Verschwenken der Drehfalle (16) zwischen der geöffneten Stellung und der geschlossenen Stellung des Verschlusses (1) bewirkt.

5. Verschluss nach einem oder mehreren der vorhergehenden Ansprüche, **dadurch gekennzeichnet, dass** die Rastvorrichtung durch eine Rastklinke (18) gebildet ist, die einen Rastvorsprung (40) aufweist und derart angeordnet ist, dass der Rastvorsprung (40) in der geöffneten Stellung des Verschlusses (1) mit einer entsprechend ausgebildeten ersten Rastmarke (37) an der Drehfalle (16) in Eingriff bringbar ist.

6. Verschluss nach einem oder mehren der vorhergehenden Ansprüche, **dadurch gekennzeichnet, dass** die Rastklinke (18) in Richtung auf die Drehfalle (16) und die Funktionsscheibe (17) vorgespannt ist, wobei der Rastvorsprung (40) an der Umfangsfläche der Funktionsscheibe (17) und der Drehfalle (16) anliegt.

7. Verschluss nach einem oder mehreren der vorgehenden Ansprüche, **dadurch gekennzeichnet, dass** die Drehfalle (16) zur Sicherung einer notverriegelten Stellung eine zweite Rastmarke (38) aufweist, die mit der Rastklinke (18) in Eingriff bringbar ist, wobei die Funktionsscheibe (17) derart ausgebildet und an der Drehfalle (16) angeordnet ist, dass die Funktionsscheibe (17) die zweite Rastmarke (38) bei der Anlage des ersten Zapfens (25) an dem der zweiten Rastmarke (38) zugewandten Ende des Langlochs (35) in der durch einen ersten Lagerbolzen (36) gebildeten Schwenkachsenrichtung im wesentlichen vollständig überdeckt.

8. Verschluss nach einem oder mehreren der vorgehenden Ansprüche, **dadurch gekennzeichnet, dass** ein Federelement, insbesondere eine Schenkelfeder (21) derart zwischen der Funktionsscheibe (17) und der Drehfalle (16) angeordnet ist, dass der erste Zapfen (25) der Funktionsscheibe (17) in Richtung auf das der zweiten Rastmarke (38) zugewandte Ende des Langlochs (35) vorgespannt ist.

9. Verschluss nach einem oder mehreren der vorgehenden Ansprüche, **dadurch gekennzeichnet, dass** die Antriebseinheit (4) einen einerseits an dem freien Ende des Hydraulikzylinders (39) und andererseits an einem Steuerungshebel (14) schwenkbar gelagerten Antriebshebel (12) aufweist, wobei an dem um eine am Verschluss (1) ortsfeste Drehachse gelagerten Steuerungshebel (14) zusätzlich ein erstes Ende eines Verbindungshebels (15a) schwenkbar gelagert ist und ein dem ersten Ende gegenüberliegendes zweites Ende des Verbindungshebels (15a) mit der Schließeinheit (3), insbesondere der Funktionsscheibe (17), verbunden ist.

10. Verschluss nach einem oder mehreren der vorgehenden Ansprüche, **dadurch gekennzeichnet, dass** das zweite Ende des Verbindungshebels (15a) gelenkig mit dem durch das Langloch (35) der Drehfalle (16) hindurchragenden Ende des ersten Zapfens (25) verbunden ist.

11. Verschluss nach einem oder mehreren der vorgehenden Ansprüche, **dadurch gekennzeichnet, dass** ein zweiter, parallel zum Verbindungshebel (15a) angeordneter Verbindungshebel (15b) einerseits auf der Lagerachse des ersten Endes des Verbindungshebels (15a) gelenkig an dem Steuerungshebel (14) und andererseits gelenkig auf dem der Drehfalle (16) gegenüberliegenden Seite der Funktionsscheibe (17) befestigt ist.

12. Verschluss nach einem oder mehreren der vorgehenden Ansprüche, **dadurch gekennzeichnet, dass** der Steuerungshebel (14) drehfest mit einem die ortsfeste Drehachse bildenden zweiten Lagerbolzen (27) verbunden ist und dass mindestens ein freies Ende des zweiten Lagerbolzen (27) zum Anschluss an ein manuelles Betätigungswerkzeug ausgebildet ist.

13. Verschluss nach einem oder mehreren der vorgehenden Ansprüche, **dadurch gekennzeichnet, dass** der Verbindungshebel (15a) und der Antriebshebel (12) derart an dem Steuerungshebel (14) gelagert sind, dass die geschlossene Stellung des Verschlusses (1) durch eine Übertotpunktlagerung gesichert ist.

14. Verschluss nach einem oder mehreren der vorgehenden Ansprüche, **dadurch gekennzeichnet, dass** zur Führung des mit dem freien Ende des Hydraulikzylinders (39) verbundenen Endes des Antriebshebels (12) auf den Enden des Gelenkstifts (33) Rollen (13) angeordnet sind, die in entsprechend ausgebildeten Antriebshebel-Langlöchern (34) in einem aus einem ersten und einem zweiten Blechteil (7, 8) gebildeten Gehäuse gelagert sind.

15. Verschluss nach einem oder mehreren der vorgehenden Ansprüche, **dadurch gekennzeichnet, dass** der Antriebshebel (12) zur Bildung einer die geöffnete Stellung bestimmenden Endlage eine korrespondierend zum dritten Lagerbolzen (29) als Vertiefung ausgebildete Anlagefläche (43) aufweist.

16. Verschluss nach einem oder mehreren der vorgehenden Ansprüche, **dadurch gekennzeichnet, dass** der Verbindungshebel (15a) zur Bildung einer die geschlossene Stellung bestimmenden Endlage eine korrespondierend zum zweiten Lagerbolzen (27) als Vertiefung ausgebildete Anlagefläche aufweist.

17. Verschluss nach einem oder mehreren der vorgehenden Ansprüche, **dadurch gekennzeichnet, dass** ein Endschalter (20) vorgesehen ist, der die Endstellung des Hydraulikzylinders (39) in der geschlossene Stellung anzeigt.

18. Verschluss nach einem oder mehreren der vorgehenden Ansprüche, **dadurch gekennzeichnet, dass** ein einerseits an einem Gehäusegrundkörper (5) der Schließeinheit (3) und andererseits an der Funktionsscheibe (17) angeordnetes Federelement, insbesondere eine Zugfeder (23) die Funktionsscheibe (17) in Richtung auf die Öffnungslage vorspannt.

## Claims

1. A lock for foldable tops, flaps or similar on a vehicle, especially for locking and bracing a cloth retaining bracket of a vehicle foldable top that can be swiveled, with
- a closing unit having a latch for receiving and locking a retaining element, and
- a drive unit for swiveling the latch between an opened position and a closed position of the lock,
**wherein**
- the drive unit (4) is biased in the opened position of the lock (1) in the direction of the closed position of the lock (1), **characterized in that**
- the latch (16) is locked releasably by the retaining element in the opened position of the lock (1) by means of a catch device (18).

2. The lock according to claim 1, **characterized in that** the closing unit (3) has a functional disc (17), which is formed such that, and interacts with the latch (16) and the catch device (18) such that said functional disc locks the latch (16) in the opened position of the lock (1) in the direction of closing, and the interaction with the retaining element effects a relative movement of the latch (16) with regard to the functional disc (17), releasing the latch (16).

3. The lock according to claim 2, **characterized in that** the functional disc (17) and the latch (16) are arranged pivotably on a common pivot axis at the closing unit (3), wherein the functional disc (17) is connected with the latch (16) via a first pin (25), attached rigidly to the disc and running in an elongated hole (35) of the latch (16).

4. The lock according to one or more of the preceding claims, **characterized in that** the drive unit (4) has a drive element, especially a hydraulic drive (2) having a hydraulic cylinder (39), wherein the hydraulic cylinder (39) is connected at its free end with the closing unit (3), especially with the functional disc (17), in such a way that a displacement of the hydraulic cylinder (39) effects a swiveling of the latch (16) between the opened position and the closed position of the lock (1).

5. The lock according to one or more of the preceding claims, **characterized in that** the catch device is formed by a catch detent (18), which has a catch projection (40) and is arranged such that the catch projection (40), in the open position of the lock (1), can be brought into engagement with a correspondingly built first catch notch (37) on the latch (16).

6. The lock according to one or more of the preceding claims, **characterized in that** the catch detent (18) is biased in the direction of the latch (16) and the functional disc (17), wherein the catch projection (40) contacts the peripheral surface of the functional disc (17) and the latch (16).

7. The lock according to one or more of the preceding claims, **characterized in that** the latch (16), for securing in an emergency lock position, has a second catch notch (38), which can be brought into engagement with the catch detent (18), wherein the functional disc (17) is built and arranged at the latch (16) in such a way that the functional disc (17) essentially completely covers the second catch notch (38) with the contact of the first pin (25) on the end of the elongated hole (35) facing towards the second catch notch (38) in the swivel axis direction formed by a first bearing bolt (36).

8. The lock according to one or more of the preceding claims, **characterized in that** a spring element, especially a leg spring (21), is arranged between the functional disc (17) and the latch (16) in a way such that the first pin (25) of the functional disc (17) is biased in the direction of the end of the elongated hole (35) facing the second catch notch (38).

9. The lock according to one or more of the preceding claims, **characterized in that** the drive unit (4) has a drive lever (12), pivotably supported, on the one hand at the free end of the hydraulic cylinder (39), and on the other hand pivotably supported at a control lever (14), wherein at the control lever (14), supported about an axis of rotation with a fixed position on the lock (1), in addition, a first end of a connecting lever (15a) is pivotably supported, and a second end of the connecting lever (15a), lying opposite of the first end, is connected with the closing unit (3), especially the functional disc (17).

10. The lock according to one or more of the preceding claims, **characterized in that** the second end of the connecting lever (15a) is pivotably connected with the end of the first pin (25) projecting through the elongated hole (35) of the latch (16).

11. The lock according to one or more of the preceding claims, **characterized in that** a second connecting lever (15b) that is parallel to the connecting lever (15a), is pivot-mounted on the one hand, on the bearing shaft of the first end of the connecting lever (15a) at the control lever (14), and on the other hand, is pivot-mounted on the side of the functional disc (17) lying opposite from the latch (16).

12. The lock according to one or more of the preceding claims, **characterized in that** the control lever (14) is connected, rotationally fixed, with a second bearing bolt (27) forming the fixed axis of rotation, and that at least a free end of the second bearing bolt (27) is formed for the connection to a manual actuation tool.

13. The lock according to one or more of the preceding claims, **characterized in that** the connecting lever (15a) and the drive lever (12) are supported at the control lever (14) in such a way that the closed position of the lock (1) is secured by a position beyond the dead center.

14. The lock according to one or more of the preceding claims, **characterized in that** for the guidance of the end of the drive lever (12) connected with the free end of the hydraulic cylinder (39), rollers (13) are arranged on the end of the pivot pin (33), where said rollers are supported in correspondingly formed drive lever oblong holes (34) in a housing built from a first and a second sheet metal piece (7, 8).

15. The lock according to one or more of the preceding claims, **characterized in that** the drive lever (12), for forming an end-of-travel position determining the opened position, has a contact surface (43), formed as an indentation corresponding to the third bearing bolt (29).

16. The lock according to one or more of the preceding claims, **characterized in that** the connecting lever (15a), for forming an end-of-travel position determining the closed position, has a contact surface formed as an indentation corresponding to the second bearing bolt (27).

17. The lock according to one ore more of the preceding claims, **characterized in that** a limit switch (20) is provided which indicates the end position of the hydraulic cylinder (39) in the closed position.

18. The lock according to one or more of the preceding claims, **characterized in that** a spring element, especially a tension spring (23), arranged on the one hand, at a housing base plate (5) of the closing unit (3), and on the other hand, at the functional disc (17), is biasing the functional disc (17) in the direction of the opened position.

## Revendications

1. Verrouillage pour capote, abattants ou similaires de véhicules automobiles, en particulier pour le blocage et la tension d'un étrier de retenue de toile d'une capote pivotable d'une voiture particulière, comprenant
- une unité de verrouillage présentant un loquet rotatif pour la réception et le blocage d'un élément de retenue et
- une unité d'entraînement pour pivoter le loquet rotatif entre une position ouverte et une position fermée du verrouillage,
**dans lequel**
- l'unité d'entraînement (4) dans la position ouverte du verrouillage (1) est précontrainte dans la direction de la position fermée du verrouillage (1), **caractérisé en ce que**
- le loquet rotatif (16) est bloqué de façon déblocable par l'élément de retenue dans la position ouverte du verrouillage (1) au moyen d'un dispositif d'encliquetage (18).

2. Verrouillage selon la revendication 1, **caractérisé en ce que** l'unité de verrouillage (3) présente une plaque fonctionnelle (17) qui est constituée de telle façon et coopère avec le loquet rotatif (16) et le dispositif d'encliquetage (18) de telle sorte qu'elle bloque le loquet rotatif (16) dans la position ouverte du verrouillage (1) dans la direction de serrage et la coopération avec l'élément de retenue cause un mouvement relatif du loquet rotatif (16) par rapport à la plaque fonctionnelle (17) débloquant le loquet rotatif (16).

3. Verrouillage selon la revendication 2, **caractérisé en ce que** la plaque fonctionnelle (17) et le loquet rotatif (16) sont disposés sur un axe de pivotement commun de façon articulée sur l'unité de verrouillage (3), dans lequel la plaque fonctionnelle (17) est connectée au loquet rotatif (16) par un premier tenon (25) fixé sur celle-ci de manière immobile et passant dans un trou oblong (35) du loquet rotatif (16).

4. Verrouillage selon l'une ou plusieurs des revendications précédentes, **caractérisé en ce que** l'unité d'entraînement (4) présente un élément d'entraînement, en particulier un entraînement (2) hydraulique présentant un cylindre hydraulique (39), dans lequel le cylindre hydraulique (39) est connecté à son extrémité libre de telle façon avec l'unité de verrouillage (3), en particulier avec la plaque fonctionnelle (17), qu'un déplacement du cylindre hydraulique (39) cause un pivotement du loquet rotatif (16) entre la position ouverte et la position fermée du verrouillage (1).

5. Verrouillage selon l'une ou plusieurs des revendications précédentes, **caractérisé en ce que** le dispositif d'encliquetage est formé par un cliquet d'enclenchement (18) qui présente une saillie d'encastrement (40) et est disposé de telle façon que la saillie d'encastrement (40) peut, dans la position ouverte du verrouillage (1), être amenée en prise avec une première encoche d'encliquetage (37) constituée de façon correspondante au niveau du loquet rotatif (16).

6. Verrouillage selon l'une ou plusieurs des revendications précédentes, **caractérisé en ce que** le cliquet d'enclenchement (18) est précontraint dans la direction du loquet rotatif (16) et de la plaque fonctionnelle (17), dans lequel la saillie d'encastrement (40) appuie sur la surface circonférentielle de la plaque fonctionnelle (17) et du loquet rotatif (16).

7. Verrouillage selon l'une ou plusieurs des revendications précédentes, **caractérisé en ce que** le loquet rotatif (16) présente une seconde encoche d'encliquetage (38) qui peut être amenée en prise avec le cliquet d'enclenchement (18) pour le blocage d'une position de verrouillage de sécurité, dans lequel la plaque fonctionnelle (17) est constituée de telle façon et est disposée sur le loquet rotatif (16) de telle sorte que la plaque fonctionnelle (17) recouvre essentiellement complètement la seconde encoche d'encliquetage (38) lors de l'appui du premier tenon (25) sur l'extrémité du trou oblong (35) orientée vers la seconde encoche d'encliquetage (38) dans la direction de l'axe de pivotement formée par un premier boulon de palier (36).

8. Verrouillage selon l'une ou plusieurs des revendications précédentes, **caractérisé en ce qu'**un élément de ressort, en particulier un ressort à branches (21) est disposé entre la plaque fonctionnelle (17) et le loquet rotatif (16) de telle sorte que le premier tenon (25) de la plaque fonctionnelle (17) est précontraint dans la direction de l'extrémité du trou oblong (35) orienté vers la seconde encoche d'encliquetage (38).

9. Verrouillage selon l'une ou plusieurs des revendications précédentes, **caractérisé en ce que** l'unité d'entraînement (4) présente un levier d'entraînement (12) placé de façon pivotable d'un côté au niveau de l'extrémité libre du cylindre hydraulique (39) et de l'autre côté au niveau d'un levier de contrôle (14), dans lequel en outre une première extrémité d'un levier de connexion (15a) est placée de façon pivotable au niveau du levier de contrôle (14) logé autour d'un axe de pivotement stationnaire sur le verrouillage (1) et une seconde extrémité du levier de connexion (15a) opposée à la première extrémité est connectée à l'unité de verrouillage (3), en particulier à la plaque fonctionnelle (17).

10. Verrouillage selon l'une ou plusieurs des revendications précédentes, **caractérisé en ce que** la seconde extrémité du levier de connexion (15a) est connectée de façon articulée avec l'extrémité du premier tenon (25) dépassant du trou oblong (35) du loquet rotatif (16).

11. Verrouillage selon l'une ou plusieurs des revendications précédentes, **caractérisé en ce qu'**un second levier de connexion (15b) disposé parallèlement au levier de connexion (15a) est fixé d'un côté sur l'axe de palier de la première extrémité du levier de connexion (15a) de façon articulée avec le levier de contrôle (14) et d'un autre côté de façon articulée sur le côté de la plaque fonctionnelle (17) opposé au loquet rotatif (16).

12. Verrouillage selon l'une ou plusieurs des revendications précédentes, **caractérisé en ce que** le levier de contrôle (14) est connecté de façon solidaire en rotation avec un second boulon de palier (27) formant l'axe de pivotement stationnaire et **en ce qu'**au moins une extrémité libre du second boulon de palier (27) est constituée pour le raccordement à un outil d'actionnement manuel.

13. Verrouillage selon l'une ou plusieurs des revendications précédentes, **caractérisé en ce que** le levier de connexion (15a) et le levier d'entraînement (12) sont logés de telle façon sur le levier de contrôle (14) que la position fermée du verrouillage (1) est bloquée par un positionnement à dépassement de point mort.

14. Verrouillage selon l'une ou plusieurs des revendications précédentes, **caractérisé en ce que** des roulements (13) sont disposés aux extrémités de la cheville d'articulation (33) pour le guidage de l'extrémité du levier d'entraînement (12) connecté à l'extrémité libre du cylindre hydraulique (39), les roulements étant logés dans des trous oblongs de levier d'entraînement (34) constitués de façon correspondante dans un carter constitué à partir d'une première et d'une seconde pièce de tôle (7, 8).

15. Verrouillage selon l'une ou plusieurs des revendications précédentes, **caractérisé en ce que** le levier d'entraînement (12) présente une surface d'appui (43) constituée en tant qu'enfoncement correspondant au troisième boulon de palier (29) pour la formation d'une position extrême déterminant la position ouverte.

16. Verrouillage selon l'une ou plusieurs des revendications précédentes, **caractérisé en ce que** le levier de connexion (15a) présente une surface d'appui constituée en tant qu'enfoncement correspondant au second boulon de palier (27) pour la formation d'une position extrême déterminant la position fermée.

17. Verrouillage selon l'une ou plusieurs des revendications précédentes, **caractérisé en ce qu'**un commutateur de fin de course (20) est prévu qui indique la position de fin de course du cylindre hydraulique (39) dans la position fermée.

18. Verrouillage selon l'une ou plusieurs des revendications précédentes, **caractérisé en ce qu'**un élément de ressort, en particulier un ressort de traction (23), disposé d'un côté au niveau d'un corps de base de carter (5) de l'unité de verrouillage (3) et de l'autre côté au niveau de la plaque fonctionnelle (17), précontraint la plaque fonctionnelle (17) en direction de la position ouverte.
